# EUROPÄISCHE PATENTSCHRIFT

(11) **EP 2 396 163 B1**
(45) Veröffentlichungstag und Bekanntmachung des Hinweises auf die Patenterteilung: **14.05.2014**
(21) Anmeldenummer: 10702868.0
(22) Anmeldetag: 04.02.2010
(51) Int. Cl.: B29C 70/38, B30B 3/00

(54) **ANPRESSVORRICHTUNG ZUM ANPRESSEN VON FASERVERSTÄRKTEN THERMOPLASTISCHEN MATERIALIEN, FASERANORDNUNGSVORRICHTUNG UND VERFAHREN ZUM ANORDNEN EINES FASERVERSTÄRKTEN THERMOPLASTISCHEN MATERIALS**
PRESSING DEVICE FOR PRESSING FIBER-REINFORCED THERMOPLASTIC MATERIALS, FIBER ARRANGEMENT DEVICE AND METHOD FOR ARRANGEMENT OF A FIBER-REINFORCED THERMOPLASTIC MATERIAL
DISPOSITIF DE PRESSION DESTINÉ À PRESSER DES MATÉRIAUX THERMOPLASTIQUES RENFORCÉS PAR DES FIBRES, DISPOSITIF D'AGENCEMENT DE FIBRES ET PROCÉDÉ D'AGENCEMENT D'UN MATÉRIAU THERMOPLASTIQUE RENFORCÉ PAR DES FIBRES

(30) Priorität: 16.02.2009 DE 102009009186; 17.02.2009 US 153042 P
(43) Veröffentlichungstag der Anmeldung: 21.12.2011
(73) Patentinhaber: Airbus Operations GmbH, 21129 Hamburg (DE)
(72) Erfinder: NAUMANN, Niko, 86391 Stadtbergen (DE)
(74) Vertreter: Kopf, Korbinian Paul
(86) Internationale Anmeldenummer: PCT/EP2010/051374
(87) Internationale Veröffentlichungsnummer: WO 2010/091997

(56) Entgegenhaltungen:
- EP-A1- 0 361 997
- EP-A1- 1 211 052
- EP-A1- 1 775 108
- EP-A2- 0 411 995
- US-A- 4 601 775
- US-A- 4 990 213
- "Aerogel" Wikipedia 4. November 2008 (2008-11-04), XP002573549 Gefunden im Internet: URL:http://de.wikipedia.org/w/index.php?ti tle=Aerogel&oldid=52619137> [gefunden am 2010-03-16]

## Beschreibung

### Gebiet der Erfindung

Die vorliegende Erfindung betrifft eine Anpressvorrichtung zum Anpressen von faserverstärkten thermoplastischen Materialien sowie eine Faseranordnungsvorrichtung und ein Verfahren zum Anordnen eines faserverstärkten thermoplastischen Materials.

### Hintergrund der Erfindung

Hoch belastbare, faserverstärkte Kunststoffbauteile mit beanspruchungsgerechter Faserorientierung und Faserpositionierung werden zunehmend in verschiedensten Bereichen der Technik eingesetzt. Beispielsweise können solche Kunststoffbauteile im Flugzeugbau verwendet werden und dort zu einer signifikanten Reduzierung des Gewichts des Flugzeugs führen. Solche faserverstärkten Kunststoffbauteile lassen sich durch Ablegen vorimprägnierter Faserstränge herstellen. Hierbei können sowohl Kohlenstofffasern (CFK - carbonfaserverstärkter Kunststoff) als auch Glasfasern (GFK - glasfaserverstärkter Kunststoff) zur Verstärkung eines als Matrix dienenden Kunststoffmaterials verwendet werden.

Bei der Herstellung von Bauteilen aus thermoplastischen Faser-Kunststoff-Verbunden werden häufig faserverstärkte Kunststoffbändchen verwendet, die in einem separaten, vorgeschalteten Prozess imprägniert und konsolidiert werden. Diese Kunststoffbändchen werden direkt vor dem Ablegen bzw. Anpressen gegen eine Form erwärmt und dann mit Hilfe einer Anpressvorrichtung, wie zum Beispiel einer Anpressrolle im Ablegepunkt der Geometrie des Bauteils bzw. der Form angepasst und konsolidiert. Die Geometrie des Bauteils kann dabei durch eine Ebene oder gekrümmte Oberfläche der Form, auf die abgelegt wird, vorgegeben werden. Ein solches automatisierbares Verfahren wird als "Tape legen" oder im Englischen als "tape/tow placement" bzw. "fibre placement" bezeichnet und kann sowohl beim kompletten Aufbau wie auch bei einer lokalen Verstärkung von Bauteilen zur Anwendung kommen.

Ein mögliches Problem beim Verlegen von faserverstärkten thermoplastischen Materialien beispielsweise in Form von faserverstärkten Kunststoffbändchen kann darin liegen, dass die durch eine Form, z.B. eine Positivform oder eine Negativform, bestimmte Geometrie eines Bauteils dadurch beschränkt sein kann, dass durch eine starre Anpressrolle ein gleichmäßiges Verpressen und/oder Verlegen der Kunststoffbändchen erschwert sein kann und insbesondere eine gewünschte Faserorientierung innerhalb von gekrümmten Bauteilen schwierig realisiert werden kann. Konvexe und konkave Bauteilkrümmungen können eine ungleichförmige oder auch teilweise unmögliche Anpressung des imprägnierten Kunststoffbändchens an der Form verursachen, womit Konsolidierungsdefizite verbunden sein können.

Es kann daher ein Bedarf an einer Anpressvorrichtung zum Anpressen von faserverstärkten Kunststoffmaterialien bestehen, die ein verbessertes Anpressen der Kunststoffmaterialien gegen eine Form während eines Verlegevorgangs ermöglicht. Insbesondere kann Bedarf an einer Anpressvorrichtung bestehen, die ein vorzugsweise gleichzeitiges Verlegen von mehreren Bändern von faserverstärkten Kunststoffmaterialien in einer Vielzahl von Verlegerichtungen und angepasst an eine Vielzahl von Formen ermöglicht und die ferner den beim Verlegen von faserverstärkten thermoplastischen Materialien auftretenden Arbeitsbedingungen wie zum Beispiel einer erhöhten Temperatur langfristig standhält. Ferner kann auch ein Bedarf an einer Faseranordnungsvorrichtung und einem Verfahren zum Anordnen eines faserverstärkten thermoplastischen Materials an einer Form unter Verwendung einer solchen Anpressvorrichtung bestehen.

US 4 601 775 beschreibt ein nachgiebiges Presselement für eine Verbundmateriallegemaschine. EP 1 775 108 A1 beschreibt einen Mehrfach-Aufbring-Kopf für Faserstreifen und ein Verfahren zum Aufbringen der Faserstreifen. EP 0 361 997 A1 beschreibt eine Formvorrichtung zum automatischen Anordnen eines Fasergewebes auf einer Form. EP 0 411 995 A2 beschreibt eine Aufbringvorrichtung für eine Formmaschine mittels Verbundmaterialbändem.

### Zusammenfassung der Erfindung

Diesem Bedarf kann durch den Gegenstand der unabhängigen Ansprüche entsprochen werden. Vorteilhafte Weiterentwicklungen der Erfindung sind in den Unteransprüchen angegeben.

Gemäß einem ersten Aspekt der vorliegenden Erfindung wird eine Anpressvorrichtung zum Anpressen von faserverstärkten thermoplastischen Materialien an eine Form vorgeschlagen. Die Anpressvorrichtung weist dabei einen Grundkörper und eine Anpressschicht an einer Oberfläche des Grundkörpers auf. Die Anpressschicht ist mit einem anorganischen Material ausgebildet. Ferner ist die Anpressschicht derart ausgebildet, dass sie eine Flexibilität derart aufweist, um sich beim Anpressen an die Kontur der Form anzupassen.

Ein Konzept der vorliegend beschriebenen Erfindung kann als auf der folgenden Idee basierend beschrieben werden: Herkömmliche Anpressvorrichtungen wurden häufig aus organischen Materialien, oft auf Polymerbasis, gebildet bzw. mit einer Schicht aus solchen organischen Materialien beschichtet. Diese organischen Materialien weisen oft von sich aus eine gewisse Flexibilität auf, so dass diese herkömmlichen Anpressvorrichtungen aufgrund des verwendeten Herstellungsmaterials eine Flexibilität aufweisen können, um sich beim Anpressen an die Kontur einer Form anzupassen. Mit solchen herkömmlichen Anpressvorrichtungen wurden meist duroplastische faserverstärkte Kunststoffmaterialien verarbeitet.

Es wurde nun erkannt, dass solche herkömmlichen Anpressvorrichtungen beim Verarbeiten von faserverstärkten thermoplastischen Materialien wie zum Beispiel PEEK (PolyEtherEtherKetone), PEKK (PolyEtherKetoneKetone) oder PPS (PolyPhenylenSulfid) aufgrund der dort notwendigen erhöhten Verarbeitungstemperaturen, die wesentlich über denjenigen von duroplastischen Materialien liegen und im Bereich von oberhalb von 350°C beispielsweise für PEEK liegen, zu Problemen führen kann.

Eine Lösung dieser Probleme wurde darin erkannt, die auf einem Grundkörper der Anpressvorrichtung angebrachte Anpressschicht mit einem anorganischen Material wie beispielsweise einem keramischen Material auszubilden. Solche anorganischen Materialien haben in der Regel eine höhere Widerstandsfähigkeit gegenüber erhöhten Temperaturen.

Da anorganische Materialien und insbesondere keramische Materialien häufig per se hart und spröde sind, soll die Anpressschicht derart ausgebildet sein, dass sie eine ausreichende Flexibilität aufweist, um sich beim Anpressen an die Kontur der Form, an die die faserverstärkten Materialien angeschmiegt werden sollen, anpassen zu können. Dabei wird die notwendige Flexibilität vorzugsweise nicht aufgrund einer Materialeigenschaft des für die Anpressschicht verwendeten Materials erreicht, wie dies bei herkömmlichen Anpressvorrichtungen häufig der Fall war. Stattdessen kann die notwendige Flexibilität durch Verwendung einer geeigneten strukturellen Ausgestaltung der Anpressschicht erreicht werden. Einzelheiten und mögliche Beispiele hierfür werden weiter unten beschrieben.

Mögliche Merkmale, Eigenschaften, Vorteile und alternative Ausführungsformen der Erfindung werden nachfolgend angegeben.

Die Anpressvorrichtung kann dazu ausgelegt sein, faserverstärkte thermoplastische Materialien, die beispielsweise in Form von Faserbändchen oder Tapes bereitgestellt werden, gegen eine Form, deren Struktur und Geometrie zum Beispiel eine positive oder negative Wiedergabe des herzustellenden Bauteils darstellt, anzupressen. Während des Anpressvorgangs können dabei die Anpressvorrichtung und die Form relativ zueinander bewegt werden. Die Anpressvorrichtung kann beispielsweise in Form einer Anpressrolle oder eines Anpressrakels oder Anpressschuhs ausgestaltet sein.

Der Grundkörper der Anpressvorrichtung kann eine beliebige Geometrie aufweisen. Der Grundkörper kann der Anpressvorrichtung dabei eine Grundform, beispielsweise rollenförmig oder rakelförmig, geben. Der Grundkörper kann starr und unflexibel sein. Der Grundkörper kann aus einem beliebigen Material, beispielsweise Metall, Kunststoff oder Keramik sein.

Die Anpressschicht kann an einer Oberfläche des Grundkörpers vorgesehen sein, die während des Anpressvorgangs hin zu den zu verpressenden faserverstärkten Materialien und/oder hin zur Form gerichtet ist. Im Falle eines rollenförmigen Grundkörpers kann die Anpressschicht an einer Zylinderoberfläche des Grundkörpers angeordnet sein. Die Anpressschicht kann in diesem Fall somit beim Abrollen an der Form entlang gerollt werden und das faserverstärkte Material damit weitgehend reibungsfrei gegen die Form anpressen. Im Falle eines Anpressrakels kann die Anpressschicht an der Kante und an den Seitenflächen, die während des Anpressens gegen die Form anstehen, angeordnet sein. Die Anpressschicht kann eine im Vergleich zu den Dimensionen des Grundkörpers geringe Dicke aufweisen. Beispielsweise kann an einem Grundkörper mit einem Durchmesser von 50mm eine Anpressschicht von 1-5mm Dicke vorgesehen sein.

Vorzugsweise ist die Anpressschicht derart ausgebildet, dass sie sich aufgrund einer immanenten Flexibilität beim Anpressen derart an die Kontur der Form anpassen kann, dass es zu einem weitgehend homogenen Anpressdruck zwischen der Anpressvorrichtung und der Form kommt. Lokal erhöhte Anpressdrücke sollten dabei möglichst weitgehend vermieden werden.

Gemäß einer Ausführungsform der vorliegenden Erfindung ist die Anpressschicht mit einem keramischen Material ausgebildet. Das keramische Material kann eine hohe thermische Widerstandsfähigkeit haben, so dass es auch bei hohen Verarbeitungstemperaturen von beispielsweise mehr als 350°C, vorzugsweise mehr als 500°C, nicht zu einer Beschädigung der Anpressschicht kommt. Aufgrund einer hohen chemischen Widerstandsfähigkeit und/oder einer hohen mechanischen Abriebfestigkeit kann die Verwendung eines keramischen Materials auch eine Kontamination des anzupressenden faserverstärkten thermoplastischen Materials durch die Anpressschicht vermeiden. Ferner können durch die Verwendung eines geeigneten keramischen Materials aufgrund der thermischen sowie chemischen Widerstandsfähigkeit Gesundheits- und Sicherheitsgefährdungen bei Überhitzung der Anpressschicht weitgehend vermieden werden. Als mögliche keramische Materialien können z.B. Aluminiumoxid (Al₂O₃), Siliziumoxid (SiO₂), Magnesiumoxid (MgO) oder Chromoxid (Cr₂O₃) sowie Mischungen derselben verwendet werden.

Gemäß einer alternativen Ausführungsform der vorliegenden Erfindung ist die Anpressschicht mit einem u.U. faserverstärkten Aerogel ausgebildet. Solche Aerogele weisen eine sehr geringe Wärmeleitfähigkeit im Bereich um 0,02W/m*K auf, mit Steifigkeiten im Bereich von unter 1MPa bis 100MPa, wobei die geringeren Steifigkeiten aufgrund der besseren Oberflächenadaptivität bevorzugt sind. Aerogele weisen Temperaturbeständigkeiten von bis zu 1200°C auf.

Gemäß einer weiteren Ausführungsform der Erfindung ist die Anpressschicht derart ausgebildet, dass sie eine Flexibilität aufgrund ihrer strukturellen Ausgestaltung aufweist. Mit anderen Worten kann die Anpressschicht eine Flexibilität nicht bzw. nicht ausschließlich aufgrund materialtypischer Eigenschaften aufweisen, sondern soll die Flexibilität aufgrund struktureller Eigenschaften erhalten. Beispielsweise können auch Materialien, die im massiven Festkörper (bulk) hart, spröde und unflexibel sind, wie zum Beispiel viele keramische Materialien, aufgrund geeigneter geometrischer Strukturen derart ausgebildet werden, dass sich eine gewisse Flexibilität ergibt. Dünnwandige Unterstrukturen wie z.B. sogenannte Rovings, Tows, Geflechte, Garne oder Kurzfaserfleece mit Schichtdicken bzw. Durchmessern von weniger als beispielsweise 500 µm Schichtdicke können zu einer ausreichenden mechanischen Flexibilität beitragen. Diese textilen Halbzeugformen können wiederum aus einer Vielzahl von Einzelfilamenten mit weniger als beispielsweise 100 µm Dicke aufgebaut sein.

Gemäß einer weiteren Ausführungsform der Erfindung ist die Anpressschicht mit einem gewebten Textilmaterial, einem Vliesmaterial mit einem Gelege aus einem losen Faserflor, einem Fleecematerial mit maschenartiger Anordnung von Fasern und/oder einem mehrlagigen Stapel aus dünnen Papierschichten ausgebildet. Solche Materialien können vorzugsweise aus Keramikfasern zusammengesetzt sein. Keramische Faserprodukte können eine Temperaturbeständigkeit von über 1200°C , bis zu 1600°C, und sehr geringe Wärmeleitfähigkeiten von unter 0,4 W/m*K aufweisen. Keramikfaserprodukte werden z.B. von der Firma Kager GmbH Industrieprodukte in Dietzenbach (Deutschland) angeboten.

Gemäß einer weiteren Ausführungsform der Erfindung ist die Anpressschicht mit einem Material ausgebildet, das Temperaturen von bis zu 350°C, vorzugsweise bis zu 600°C und stärker bevorzugt bis zu 900°C oder sogar darüber widersteht. Mit anderen Worten sollte das Material der Anpressschicht den genannten Temperaturen ohne bleibende Schäden standhalten. Insbesondere kann es vorteilhaft sein, dass das Material den Temperaturen in einer Weise widersteht, dass die Anpressschicht auch bei diesen erhöhten Temperaturen, wie sie bei der Verarbeitung von faserverstärkten thermoplastischen Materialien auftreten können, ihre strukturellen bzw. funktionalen Eigenschaften beibehält.

Gemäß einer weiteren Ausführungsform der Erfindung ist die Anpressschicht mit einem Material ausgebildet, das eine Wärmeleitfähigkeit von weniger als 1 W/m*K, vorzugsweise weniger als 0,5 W/m*K bei einer Temperatur im Bereich von etwa 1000°C aufweist. Aufgrund der geringen Wärmeleitfähigkeit trägt die Anpressschicht zu einer guten thermischen Isolation zwischen den erhitzten, zu verarbeitenden faserverstärkten thermoplastischen Materialien und dem Grundkörper der Anpressvorrichtung bei. Obwohl der häufig aus Metall bestehende Grundkörper eine hohe Wärmeleitfähigkeit und Wärmekapazität aufweisen kann, kann somit ein hoher Wärmeübergang von den heißen thermoplastischen Materialien hin zu der Anpressvorrichtung weitgehend vermieden werden. Es kann somit vermieden werden, dass die thermoplastischen Materialien durch die Anpressvorrichtung beim Anpressen stark abgekühlt werden, was eine Vernetzung und Diffusion innerhalb der thermoplastischen Materialien ansonsten verschlechtern könnte. Aufgrund der geringen Wärmeleitfähigkeit innerhalb der Anpressschicht kann somit ein schneller Wärmeverlust des zu verarbeitenden thermoplastischen Materials vermieden werden und aufgrund der verbesserten Vernetzung und Diffusion eine Qualität des letztendlich aus dem thermoplastischen Material hergestellten Bauteils verbessert werden.

Gemäß einer weiteren Ausführungsform der Erfindung weist die Anpressvorrichtung ferner eine Temperiereinrichtung zum Temperieren des Grundkörpers auf. Beispielsweise kann der Grundkörper mit Hilfe der Temperiereinrichtung auf eine erhöhte Temperatur geheizt werden, um einen Wärmeübergang von dem heißen thermoplastischen Material hin zum Grundkörper während des Anpressens weiter zu reduzieren. Andererseits kann der Grundkörper mit Hilfe der Temperiereinrichtung gezielt gekühlt werden, um eine bleibende Schädigung des Grundkörpers durch den kontinuierlichen Wärmeintrag in den Grundkörper z.B. während des Anpressens des heißen thermoplastischen Materials zu vermeiden. Als Temperiereinrichtung kann beispielsweise eine Wasserkühlung, eine Luftkühlung, eine Peltierkühlung bzw. analoge Heizeinrichtungen dienen.

Gemäß einer weiteren Ausführungsform der Erfindung ist die Anpressschicht an dem Grundkörper angeklebt. Die Form des Grundkörpers kann sehr präzise ausgearbeitet sein, beispielsweise durch Drehen eines entsprechenden Metallgrundkörpers in Rollenform. Auf die Oberfläche des Grundkörpers kann dann die Anpressschicht nachträglich aufgeklebt werden. Im Falle einer Anpressschicht aus keramischem Material können hierzu spezielle Keramikklebstoffe verwendet werden. Spezielle hochtemperaturfähige Keramikklebstoffe werden z.B. von der Firma Polytec PT GmbH Polymere Technologien in Waldbronn (Deutschland) (www.polytec-pt.de) angeboten. Gegebenenfalls kann eine solche Klebeverbindung durch chemische oder mechanische Mittel gelöst werden und die Anpressschicht dadurch wieder entfernt werden, um sie beispielsweise nach entsprechender Abnutzung oder durch Verunreinigung durch das thermoplastische Material zu ersetzen.

Gemäß einer weiteren Ausführungsform der Erfindung kann die Anpressschicht mittels schlauchförmiger textiler Halbzeuge auf den Grundkörper aufgezogen werden. Dabei kann z.B. ein Geflecht ("Braid") ähnlich wie ein Strumpf über einen Grundkörper gezogen werden.

Gemäß einem weiteren Aspekt der Erfindung wird eine Faseranordnungsvorrichtung vorgeschlagen, die neben einer Anpressvorrichtung, wie sie vorangehend beschrieben wurde, zusätzlich eine Zuführvorrichtung zum Zuführen eines faserverstärkten thermoplastischen Materials zu der Anpressvorrichtung sowie eine Heizvorrichtung zum Erhitzen des faserverstärkten thermoplastischen Materials auf eine Plastifizierungstemperatur aufweist.

Gemäß einem weiteren Aspekt der Erfindung wird ein Verfahren zum Anordnen eines faserverstärkten thermoplastischen Materials an eine Form vorgeschlagen, wobei das Verfahren das Bereitstellen eines faserverstärkten thermoplastischen Materials, das Erhitzen des faserverstärkten thermoplastischen Materials auf eine Plastifizierungstemperatur und das Anpressen des faserverstärkten thermoplastischen Materials an die Form mittels der oben beschriebenen Anpressvorrichtung aufweist.

Bei der Faseranordnungsvorrichtung sowie bei dem Faseranordnungsverfahren kann ein faserverstärktes thermoplastisches Material beispielsweise in Form von Bändern oder Matten bereitgestellt bzw. zugeführt werden. Das faserverstärkte thermoplastische Material kann dabei ein Gewebe oder Gelege aus Fasern, beispielsweise Kohlenstofffasern oder Glasfasern, sein, das mit einem hochwertigen thermoplastischen Material wie beispielsweise PEEK, PEKK oder PPS vorimprägniert ist. Anders ausgedrückt können Fasern in eine Matrix aus thermoplastischem Material eingelegt sein. Die Richtung der Fasern kann dabei an eine zu erwartende Belastungsrichtung innerhalb des herzustellenden Bauteils angepasst sein. Üblicherweise liegt die Faserverstärkung als unidirektionale Verstärkung und wird im Prozess entlang der Hauptkraftflüsse ausgerichtet.

Um das faserverstärkte thermoplastische Material verarbeiten zu können und um insbesondere ein Bauteil durch Übereinanderschichten einzelner Lagen aus faserverstärktem thermoplastischen Material bilden zu können, wird das thermoplastische Material auf eine Plastifizierungstemperatur erhitzt. Bei der Plastifizierungstemperatur kann das thermoplastische Material einerseits plastisch verformt werden und kann sich andererseits durch Vernetzung und Diffusion mit angrenzenden Schichten thermoplastischen Materials verbinden. Typische Verarbeitungstemperaturen, d.h. jene Temperaturen über Schmelztemperatur, bei denen eine ausreichend geringe Viskosität vorliegt, für thermoplastische Materialien können im Bereich von oberhalb 350°C liegen. Um das thermoplastische Material auf derart hohe Temperaturen erhitzen zu können, kann es mit Hilfe der Heizvorrichtung beispielsweise mit erhitztem Gas, das Temperaturen von bis zu 900°C aufweisen kann, umspült werden. Alternativ kann die Heizvorrichtung das thermoplastische Material auch lokal optisch beispielsweise mit Hilfe eines Lasers oder eines Infrarotheizers erhitzen.

Das derart plastifizierte thermoplastische Material wird dann mit der oben beschriebenen Anpressvorrichtung gegen die Form bzw. gegen in vorangehenden Verfahrensschritten bereits angelegte Schichten thermoplastischen Materials an der Form gepresst. Dabei kann sich das thermoplastische Material gegebenenfalls mit den zuvor abgeschiedenen Materialschichten verbinden und durch Abkühlen des thermoplastischen Materials aushärten.

Aufgrund der gleichmäßigen Anpressung des thermoplastischen Materials durch die hierin beschriebene vorteilhaft ausgebildete Anpressvorrichtung aufgrund der Flexibilität der Anpressschicht sowie aufgrund des möglicherweise geringen Wärmeübergangs von dem heißen thermoplastischen Material hin zu dem Grundkörper und der dadurch bewirkten langsamen Auskühlung des thermoplastischen Materials während der Verarbeitung kann hiermit potentiell eine sehr hohe interlaminare Festigkeit des durch das Laminat gebildeten Bauteils erreicht werden.

Die vorangehend in Bezug auf einzelne Ausführungsformen der vorliegenden Erfindung beschriebenen Merkmale können in beliebiger Weise miteinander kombiniert werden. Insbesondere können auch Merkmale, die für die Anpressvorrichtung bzw. die Faseranordnungsvorrichtung beschrieben wurden, mit Merkmalen, die für das Verfahren zum Anordnen des faserverstärkten thermoplastischen Materials beschrieben wurden, kombiniert werden.

Die vorangehend beschriebenen und weitere Aspekte, Merkmale und Vorteile der vorliegenden Erfindung werden aus der nachfolgenden Beschreibung spezifischer Ausführungsformen und unter Bezugnahme auf die beigefügten Zeichnungen ersichtlich.

### Kurze Beschreibung der Zeichnungen

Fig. 1 zeigt eine grobe schematische Seitenansicht einer Faseranordnungsvorrichtung mit einer Anpressvorrichtung gemäß einer Ausführungsform der Erfindung.
Fig. 2a und 2b zeigen Vergrößerungen des in Fig. 1 angegebenen Ausschnittes A aus der Anpressvorrichtung gemäß Ausführungsformen der Erfindung.

Die Zeichnungen sind jeweils nur schematische Prinzipskizzen. Gleiche oder ähnliche Bezugszeichen in den Zeichnungen bezeichnen gleiche oder ähnliche Elemente.

### Detaillierte Beschreibung von Ausführungsformen der Erfindung

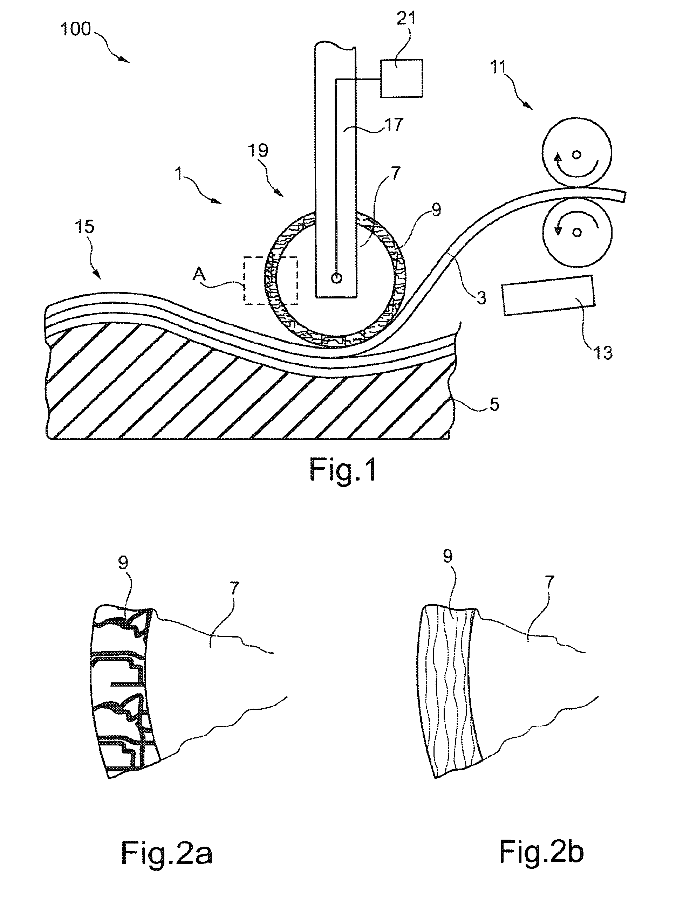

In Fig. 1 ist eine Faseranordnungsvorrichtung 100 mit einer Anpressvorrichtung 1, einer Zuführvorrichtung 11 und einer Heizvorrichtung 13 gemäß einer Ausführungsform der Erfindung dargestellt. Die Anpressvorrichtung 1 weist eine an einer Aufhängung 17 geführte Anpressrolle 19 mit einem zylinderförmigen Grundkörper 7 und einer darauf angeordneten Anpressschicht 9 auf. Der Grundkörper 7 ist mit Hilfe einer Temperiereinrichtung 21 auf temperierbar.

Eine Laminatschicht faserverstärkten thermoplastischen Materials 3 wird von der Zuführvorrichtung 11 zugeführt. Die Heizvorrichtung 13 ist hier als Infrarotstrahler ausgebildet, der das thermoplastische Material 3 bis auf eine Plastifizierungstemperatur erhitzen kann. Alternativ können auch andere Heizvorrichtungen wie beispielsweise ein Laser oder eine Heißluft- bzw. Heißgasquelle verwendet werden. Mit Hilfe der Heizvorrichtung 13 wird das thermoplastische Material in einem Bereich kurz vor der Anpressrolle 19 plastifiziert bzw. aufgeschmolzen.

Mit Hilfe der Anpressvorrichtung 1 und der daran befindlichen Anpressrolle 19 wird die Laminatschicht aus faserverstärktem thermoplastischen Material 3 gegen eine ein Bauteil wiedergebende Form 5 bzw. gegen zuvor auf dieser Form 5 abgelagerte Laminatschichten gepresst, um einen Laminatverbund 15 zu bilden. Die Anpressvorrichtung 1 und die Form 5 können hierzu relativ zueinander bewegt werden.

Die auf dem Grundkörper 7 angebrachte Anpressschicht 9 besteht aus einem anorganischen, vorzugsweise keramischen Material oder Aerogel. Aufgrund ihrer Struktur weist die Anpressschicht 9 eine ausreichende mechanische Flexibilität auf, um sich Unebenheiten in der Form bzw. dem bereits darauf abgeschiedenen Verbundlaminat 15 ausgleichen zu können.

In der in Fig. 2a dargestellten Vergrößerung des Bereichs A aus Fig. 1 ist eine auf einem Grundkörper 7 aufgebrachte Anpressschicht 9 aus einem Vlies-Gelege aus keramischen Fasern dargestellt. In Fig. 2b ist eine alternative Ausführungsform dargestellt, bei der die Anpressschicht 9 mit Hilfe mehrerer Schichten eines dünnen Papiers aus keramischem Material ausgebildet ist. Das für die Anpressschicht 9 verwendete Material sollte eine feine Oberflächenstruktur haben und möglichst nur mit einer geringen Menge Binder zusammengehalten werden, um eine grobe Laminatoberfläche und Kontaminationen des Laminates zu vermeiden.

Abschließend kann die Erfindung zusammenfassend und mit anderen Worten noch einmal wie folgt dargestellt werden: Gemäß einer Ausführungsform der Erfindung wird ein anorganisches Material wie zum Beispiel eine Hochtemperaturkeramik als Kontur-adaptive Schicht an einer Anpressvorrichtung verwendet. Da Keramiken in Form eines festen Blockes per se hart und spröde sind und daher nicht für den beschriebenen Anpressvorgang geeignet sind, soll das Keramikmaterial beispielsweise in Form eines textilen Gewebes, eines Vlieses oder mehrerer Schichten aus dünnem Papier bereitgestellt werden, um für eine ausreichende Weichheit und Elastizität zu sorgen. Die für die Anpressschicht verwendeten Materialien können hohen Verarbeitungstemperaturen widerstehen und sich einer Kontur einer Form gut anpassen. Ein zusätzlicher Vorteil kann sein, dass die guten thermischen Isolationseigenschaften von Keramiken die Bildung einer Vernetzung und Diffusion während des Ablegens einzelner Laminatschichten aus thermoplastischem Material unterstützen können, da sie die Abkühlungsgeschwindigkeit des Laminats beim Verlegen reduzieren können. Zusätzlich kann heißes Gas, wie zum Beispiel Stickstoff oder Umgebungsluft, in die Anpressvorrichtung geleitet werden, um das Abkühlen weiter zu bremsen. Dies führt potentiell zu einer höheren Interlaminatsfestigkeit des Laminats.

Abschließend wird darauf hingewiesen, dass die Begriffe "umfassen", "aufweisen" etc. das Vorhandensein weiterer Elemente nicht ausschließen. Der Begriff "ein" schließt auch das Vorhandensein einer Mehrzahl von Gegenständen nicht aus. Die Bezugszeichen in den Ansprüchen dienen lediglich der besseren Lesbarkeit und sollen den Schutzbereich der Ansprüche in keiner Weise einschränken.

### Bezugszeichenliste

- 1: Anpressvorrichtung
- 3: Faserverstärktes thermoplastisches Material
- 5: Form
- 7: Grundkörper
- 9: Anpressschicht
- 11: Zuführvorrichtung
- 13: Heizvorrichtung
- 15: Laminatverbund
- 17: Aufhängung
- 19: Anpressrolle
- 21: Temperiereinrichtung
- 100: Faseranordnungsvorrichtung

## Patentansprüche

1. Anpressvorrichtung (1) zum Anpressen eines faserverstärkten thermoplastischen Materials (3) an eine Form, wobei die Anpressvorrichtung aufweist:
einen Grundkörper (7);
eine Anpressschicht (9) an einer Oberfläche des Grundkörpers (7);
wobei die Anpressschicht (9) mit einem anorganischen Material ausgebildet ist; und
wobei die Anpressschicht ausgebildet ist, eine Flexibilität aufzuweisen, um sich beim Anpressen an die Kontur der Form (5) anzupassen.

2. Anpressvorrichtung nach Anspruch 1, wobei die Anpressschicht (9) mit einem keramischen Material oder einem Aerogel ausgebildet ist.

3. Anpressvorrichtung nach Anspruch 1 oder 2, wobei die Anpressschicht ausgebildet ist, eine Flexibilität aufgrund einer strukturellen Ausgestaltung der Anpressschicht aufzuweisen.

4. Anpressvorrichtung nach einem der vorangehenden Ansprüche, wobei die Anpressschicht mit einem gewebten Textilmaterial, einem Vliesmaterial und/oder einem mehrlagigen Stapel aus dünnen Papierschichten ausgebildet ist.

5. Anpressvorrichtung nach einem der vorangehenden Ansprüche, wobei die Anpressschicht (9) mit einem Material ausgebildet ist, das Temperaturen bis zu 500°C widersteht.

6. Anpressvorrichtung nach einem der vorangehenden Ansprüche, wobei die Anpressschicht (9) mit einem Material ausgebildet ist, dass eine Wärmeleitfähigkeit von weniger als 1 W/m*K aufweist.

7. Anpressvorrichtung nach einem der vorangehenden Ansprüche, ferner aufweisend eine Temperiereinrichtung (21) zum Temperieren des Grundkörpers (7).

8. Anpressvorrichtung nach einem der vorangehenden Ansprüche, wobei der Grundkörper (7) rollenförmig ist und die Anpressschicht (9) an einer Zylinderoberfläche des Grundkörpers angeordnet ist.

9. Anpressvorrichtung nach einem der vorangehenden Ansprüche, wobei die Anpressschicht an dem Grundkörper angeklebt ist.

10. Anpressvorrichtung nach einem der vorangehenden Ansprüche, wobei die Anpressschicht als schlauchförmig gewebtes oder gelegtes textiles Halbzeug auf den Grundkörper aufgezogen wird.

11. Faseranordnungsvornchtung (100) aufweisend:
eine Anpressvorrichtung (1) gemäß einem der Ansprüche 1 bis 10;
eine Zuführvorrichtung (11) zum Zuführen eines faserverstärkten thermoplastischen Materials zu der Anpressvorrichtung (1);
eine Heizvorrichtung (13) zum Erhitzen des faserverstärkten thermoplastischen Materials auf eine Plastifizierungstemperatur.

12. Verfahren zum Anordnen eines faserverstärkten thermoplastischen Materials an eine Form, wobei das Verfahren aufweist:
Bereitstellen faserverstärkten thermoplastischen Materials (3);
Erhitzen des faserverstärkten thermoplastischen Materials auf eine Plastifizierungstemperatur; und
Anpressen des faserverstärkten thermoplastischen Materials gegen die Form mittels einer Anpressvorrichtung (1) gemäß einem der Ansprüche 1 bis 10.

## Claims

1. A pressing-on device (1) for pressing a fiber-reinforced thermoplastic material (3) onto a mold, wherein the pressing-on device comprises:
a main body (7);
a pressing-on layer (9) on a surface of the main body (7);
wherein the pressing-on layer (9) is implemented using an inorganic material;
and
wherein the pressing-on layer is implemented to have a flexibility in order to adapt itself to the contour of the mold (5) when it is pressed on.

2. The pressing-on device according to claim 1, wherein the pressing-on layer (9) is implemented using a ceramic material or an aerogel.

3. The pressing-on device according to claim 1 or 2, wherein the pressing-on layer is implemented to have a flexibility as a result of a structural design of the pressing-on layer.

4. The pressing-on device according to one of the preceding claims, wherein the pressing-on layer is implemented using a woven textile material, a nonwoven material, and/or a multilayer stack made of thin paper layers.

5. The pressing-on device according to one of the preceding claims, wherein the pressing-on layer (9) is implemented using a material which resists temperatures up to 500°C.

6. The pressing-on device according to one of the preceding claims, wherein the pressing-on layer (9) is implemented using a material which has a thermal conductivity of less than 1 W/m*K.

7. The pressing-on device according to one of the preceding claims, further having a temperature control unit (21) for the temperature control of the main body (7).

8. The pressing-on device according to one of the preceding claims, wherein the main body (7) is in the form of a roller and the pressing-on layer (9) is situated on a cylindrical surface of the main body.

9. The pressing-on device according to one of the preceding claims, wherein the pressing-on layer is glued onto the main body.

10. The pressing-on device according to one of the preceding claims, wherein the pressing-on layer is drawn onto the main body as a tubular woven or laid textile semifinished product.

11. A fiber arranging device (100) comprising:
a pressing-on device (1) according to one of claims 1 to 10;
a supply device (11) for supplying a fiber-reinforced thermoplastic material to the pressing-on device (1);
a heating device (13) for heating the fiber-reinforced thermoplastic material to a plasticizing temperature.

12. A method for positioning a fiber-reinforced thermoplastic material on a mold, wherein the method comprises:
providing fiber-reinforced thermoplastic material (3);
heating the fiber-reinforced thermoplastic material to a plasticizing temperature; and
pressing the fiber-reinforced thermoplastic material against the mold using a pressing-on device (1) according to one of claims 1 to 10.

## Revendications

1. Système de serrage (1) destiné à serrer un matériau thermoplastique renforcé par fibres (3) contre moule, le système de serrage présentant :
- un corps de base (7) ;
- une couche de serrage (9) sur une surface du corps de base (7),
dans lequel la couche de serrage (9) est réalisée avec un matériau anorganique ;
et dans lequel la couche de serrage est réalisée pour présenter une flexibilité afin de s'adapter au contour du moule (5) lors du serrage.

2. Système de serrage selon la revendication 1, dans lequel la couche de serrage (9) est réalisée avec un matériau céramique ou un aérogel.

3. Système de serrage selon la revendication 1 ou 2, dans lequel la couche de serrage est réalisée pour présenter une flexibilité en raison d'une configuration structurale de la couche de serrage.

4. Système de serrage selon une des revendications précédentes, dans lequel la couche de serrage est réalisée avec un matériau textile tissé, un matériau non tissé et/ou un empilement multicouche de minces couches de papier.

5. Système de serrage selon une des revendications précédentes, dans lequel la couche de serrage (9) est réalisée avec un matériau qui résiste à des températures jusqu'à 500°C.

6. Système de serrage selon une des revendications précédentes, dans lequel la couche de serrage (9) est réalisée avec un matériau qui présente une conductibilité calorifique inférieure à 1 W/m*K.

7. Système de serrage selon une des revendications précédentes, présentant en outre un système de recuit (21) pour traiter par recuit le corps de base (7).

8. Système de serrage selon une des revendications précédentes, dans lequel le corps de base (7) a une forme de rouleau et la couche de serrage (9) est disposée sur une surface cylindrique du corps de base.

9. Système de serrage selon une des revendications précédentes, dans lequel la couche de serrage est collée sur le corps de base.

10. Système de serrage selon une des revendications précédentes, dans lequel la couche de serrage est appliquée sur le corps de base sous la forme d'un produit semi-fini textile tubulaire tissé ou posé.

11. Dispositif d'agencement de fibres (100) présentant :
- un système de serrage (1) selon une des revendications 1 à 10 ;
- un système d'alimentation (11) destiné à amener un matériau thermoplastique renforcé par fibres au système de serrage (1) ;
- un système de chauffage (13) destiné à chauffer le matériau thermoplastique renforcé par fibres à une température de plastification.

12. Procédé d'agencement d'un matériau thermoplastique renforcé par fibres sur un moule, le procédé comprenant:
- fournir un matériau thermoplastique renforcé par fibres (3) ;
- chauffer le matériau thermoplastique renforcé par fibres à une température de plastification ; et
- serrer le matériau thermoplastique renforcé par fibres contre le moule au moyen d'un système de serrage (1) selon une des revendications 1 à 10.
